# FASCICULE DE BREVET EUROPEEN

(11) **EP 4 115 058 B1**
(45) Date de publication et mention de la délivrance du brevet: **07.08.2024**
(21) Numéro de dépôt: 21714250.4
(22) Date de dépôt: 01.03.2021
(51) Int. Cl.: F01D 11/00, F01D 25/00, B29C 70/72, B29C 70/30

(54) **PROCÉDÉ DE FABRICATION D'UNE PLATEFORME COMPOSITE POUR UNE SOUFFLANTE DE TURBOMACHINE D'AÉRONEF ET PLATEFORME COMPOSITE POUR UNE SOUFFLANTE DE TURBOMACHINE D'AÉRONEF**
FERTIGUNGSVERFAHREN EINER PLATTFORM IN VERBUNDBAUWEISE FÜR EINEN BLÄSER EINES FLUGZEUGTRIEBWERKS UND PLATTFORM IN VERBUNDBAUWEISE FÜR EINEN BLÄSER EINES FLUGZEUGTRIEBWERKS
METHOD OF MANUFACTURING OF A COMPOSITE PLATFORM FOR A FAN OF AN AIRCRAFT ENGINE AND COMPOSITE PLATFORM FOR A FAN OF AN AIRCRAFT ENGINE

(30) Priorité: 03.03.2020 FR 2002122
(43) Date de publication de la demande: 11.01.2023
(73) Titulaire: SAFRAN AIRCRAFT ENGINES, 75015 Paris (FR)
(72) Inventeur: MINERVINO, Matteo, 77550 MOISSY-CRAMAYEL (FR); FROMONTEIL, Didier, 77550 MOISSY-CRAMAYEL (FR); GRELIN, Hervé, 77550 MOISSY-CRAMAYEL (FR); LAMOUCHE, Damien Bruno, 77550 MOISSY-CRAMAYEL (FR)
(74) Mandataire: Gevers & Orès
(86) Numéro de dépôt international: PCT/FR2021/050340
(87) Numéro de publication internationale: WO 2021/176167

(56) Documents cités:
- EP-A1- 1 970 537
- EP-A1- 2 837 774
- EP-A1- 2 837 774
- EP-A1- 3 536 909
- EP-A1- 3 536 909
- EP-A2- 1 013 886
- EP-A2- 1 013 886
- US-A- 5 193 982
- US-A- 5 193 982
- US-A1- 2017 022 824
- US-A1- 2017 022 824
- US-A1- 2017 101 876
- US-A1- 2017 101 876

## Description

### Domaine technique de l'invention

La présente invention concerne un procédé de fabrication d'une plateforme composite pour une soufflante de turbomachine d'aéronef, une plateforme composite pour une soufflante de turbomachine d'aéronef et une turbomachine d'aéronef.

### Arrière-plan technique

L'arrière-plan technique comprend notamment les documents EP-A2-1 013 886, US-A1-5,193,982, US-A1-2017/022824, EP-A1-2 837 774, US-A1-2017/101876 et EP-A1-3 536 909.

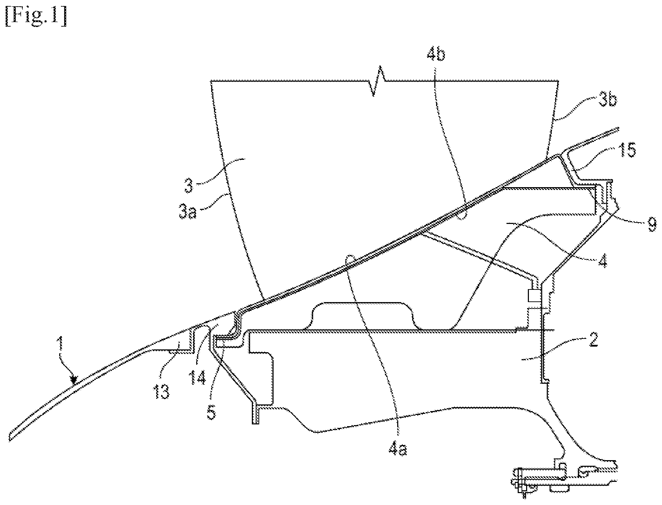

En se référant à la figure 1 qui montre une vue partielle en coupe d'un rotor 1 de soufflante d'une turbomachine d'aéronef, il est connu de l'état de la technique un rotor 1 de soufflante ayant un axe de rotation et comportant un carter de soufflante, un disque 2 de soufflante, des pales 3 ou aubes de soufflante comportant comme dispositif de rétention des pieds emmanchés dans des alvéoles de la périphérie dudit disque 2. Chaque pale 3 comprend un intrados, un extrados, un bord d'attaque 3a et un bord de fuite 3b.

Le rotor 1 de soufflante comprend des plateformes 4b intercalées entre les pales 3 de soufflante et fixées à la périphérie du disque 2. Chaque plateforme 4b comporte une face externe aérodynamique 4c s'étendant le long dudit axe sensiblement depuis les bords d'attaque 3a jusqu'aux bords de fuite 3b des pales 3 entre lesquelles cette plateforme 4b est montée.

Enfin, le rotor 1 comprend un cône amont 13, une virole amont 14 et une virole aval 15, les deux viroles 14, 15 étant solidarisées au disque 2 de soufflante. Un tel rotor de soufflante est connu notamment du document EP-A1-1 970 537.

Chaque plateforme doit assurer une fonction aérodynamique qui est sa fonction principale et une définition de la veine d'écoulement de l'air.

De plus, chaque plateforme doit satisfaire à toutes les conditions d'opération, à savoir assurer les performances pour toute l'enveloppe de fonctionnement, par exemple un vol pour un aéronef, garantir les exigences de sécurité et garantir la disponibilité du rotor comme partie du moteur pour un usage commercial.

En ce qui concerne la sécurité, chaque plateforme doit être apte à amortir une quantité importante d'énergie par écrasement de ses bords latéraux qui longent respectivement un intrados d'une aube et un extrados d'une aube adjacente.

Il est connu de réaliser des aubes de soufflante en matériau composite, l'utilisation de matériau composite dans le domaine aéronautique étant particulièrement intéressante pour leurs propriétés mécaniques et leurs gains en masse par rapport à un alliage métallique.

Les plateformes sont en général réalisées en alliage métallique. Cependant, il n'est pas concevable d'utiliser des plateformes métalliques avec des aubes composites car le risque d'usure et d'affaiblissement des aubes est trop important du fait des contacts métal-composite.

Il a donc déjà été proposé de réaliser des plateformes de soufflante en matériau composite. Cependant, les technologies actuellement connues ne sont pas entièrement satisfaisantes en particulier car le procédé de fabrication est long et complexe et entraîne un coût de production important.

La présente invention propose de résoudre au moins une partie de ces problèmes, de manière simple, efficace et économique.

### Résumé de l'invention

La présente invention concerne un procédé de fabrication d'une plateforme composite pour une soufflante de turbomachine d'aéronef selon la revendication 1, cette plateforme comportant une paroi de forme allongée et configurée pour s'étendre entre deux aubes de soufflante, cette paroi comportant une face externe aérodynamique et une face interne sur laquelle est située une patte de fixation configurée pour être fixée à un disque de soufflante, le procédé comprenant les étapes de :
a) préparation de tissus ou nappes préimprégnés avec une résine,
b) dépôt des tissus ou nappes dans un moule,
c) positionnement d'une armature métallique dans le moule, sur les tissus ou nappes, l'armature étant formée d'une seule pièce avec ladite patte de fixation,
d) dépôt de tissus ou nappes sur une partie de l'armature, et
e) fermeture et chauffage du moule en vue de la solidification de l'ensemble formé par les tissus ou nappes et l'armature.

La plateforme selon l'invention est conçue pour réduire sa masse tout en augmentant sa raideur et sa durée de vie. Elle est relativement simple à fabriquer, par agencement d'une armature avec des pré-imprégnés (tissus ou nappes), dans un moule de chauffage. Il n'y a donc pas d'étape particulière d'assemblage mécanique, tel qu'un vissage, ce qui simplifie la fabrication et réduit le coût de fabrication de la pièce.

Dans la présente demande, on entend par tissu, un élément plan et souple formé par tissage de fibres. A contrario, une nappe est un élément plan et souple formé par des fibres non tissées.

La plateforme selon l'invention peut comprendre une ou plusieurs des caractéristiques suivantes, prises isolément les unes des autres, ou en combinaison les unes avec les autres :
- l'armature comprend une plaque qui est reliée à ladite patte de fixation et qui est disposée entre deux tissus ou nappes ou deux plis de tissus ou nappes ;
- la plaque est située à distance des extrémités amont et aval de la paroi ;
- la paroi comprend au moins un bord latéral qui est incurvé, la plaque comportant au moins un bord latéral qui est en retrait par rapport à ce bord latéral de la paroi,
- la paroi comprend un bord latéral qui est incurvé concave et un bord latéral opposé qui est incurvé convexe, la plaque comportant deux bords latéraux qui sont en retrait par rapport aux bords latéraux de la paroi ;
- l'armature est au moins en partie revêtue d'un primaire d'accrochage et/ou la face externe de la paroi est au moins en partie revêtue d'une couche amortissante ;
- la résine est choisie parmi les matériaux suivants et leurs mélanges : polyaryléthercétones, polyétherimides, polyamides semi-aromatiques, et polyamides ;
- des raidisseurs sont en saillie sur la face interne de la paroi et sont réalisées en résine.

La présente invention concerne également une plateforme composite pour une soufflante de turbomachine d'aéronef selon la revendication 9, cette plateforme étant fabriquée par un procédé tel que décrit ci-dessus, cette plateforme étant dépourvue d'éléments mécaniques de fixation de l'armature à la préforme et à la plateforme, et ladite face externe étant dépourvue d'orifices de montage de tels éléments.

La présente invention concerne également une turbomachine d'aéronef, caractérisée en ce qu'elle comporte une soufflante comportant un disque portant des aubes et des plateformes telles que décrites ci-dessus.

### Brève description des figures

D'autres caractéristiques, buts et avantages de la présente invention apparaîtront à la lecture de la description détaillée qui va suivre et au regard des dessins annexés donnés à titre d'exemples non limitatifs et sur lesquels :
[Fig.1] la figure 1 est une vue schématique en coupe axiale d'un rotor de soufflante selon l'état de la technique,
[Fig.2] la figure 2 est une vue schématique en perspective du rotor de soufflante de la figure 1,
[Fig.3] la figure 3 est une vue schématique en perspective d'une plateforme composite, vue de dessus ou de l'extérieur et qui ne fait pas partie de l'invention,
[Fig.4] la figure 4 est une vue schématique en coupe selon la ligne IV-IV de la figure 3,
[Fig.5] la figure 5 est une autre vue schématique en perspective de la plateforme de la figure 3, vue de dessous ou de l'intérieur,
[Fig.6] la figure 6 est une vue schématique en perspective d'une plateforme composite conformément à un mode de réalisation de l'invention,
[Fig.7] la figure 7 est une vue schématique en coupe selon la ligne VII-VII de la figure 6, et
[Fig.8] la figure 8 est une vue schématique en coupe selon la ligne VIII-VIII de la figure 6.

### Description détaillée de l'invention

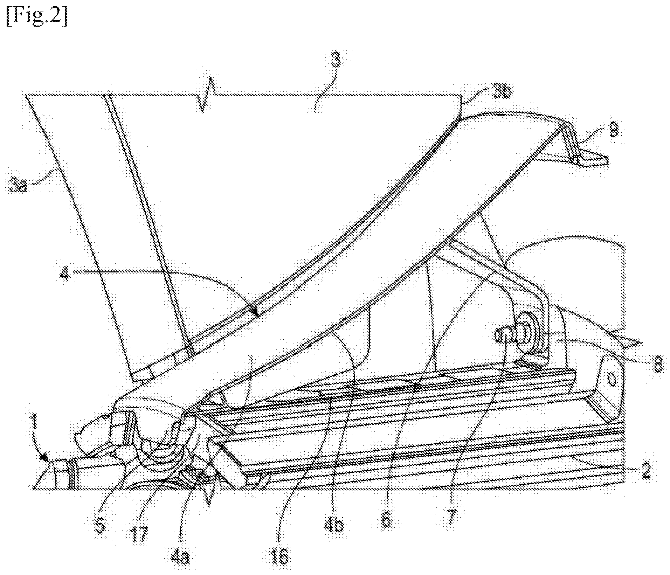

La figure 1 a été décrite dans ce qui précède et la figure 2 représente en perspective une partie du rotor de soufflante 1 de la figure 1. Les figures 1 et 2 illustrent ainsi l'art antérieur.

Le rotor 1 est monté tournant autour d'un axe de rotation et comporte un disque 2 de soufflante et des pales 3 de soufflante comportant des pieds emmanchés dans des alvéoles de la périphérie du disque 2, dont une seule pale 3 est visible à la figure 2. Chaque pale 3 comprend un intrados, un extrados, un bord d'attaque 3a et un bord de fuite 3b.

Une périphérie du disque 2 est avantageusement dentée en étant munie de dents 16, avantageusement de section trapézoïdale et s'étendant axialement sur le disque 2 par rapport à l'axe de rotation du rotor 1. Au moins une cale 17 est prévue côté amont entre deux dents 16 adjacentes qui forment une alvéole de réception d'un pied d'une pale 3, cette cale 17 étant destinée à bloquer axialement le pied de pale dans son alvéole correspondante.

Des plateformes 4 sont intercalées entre les pales 3 de soufflante et fixées à la périphérie du disque 2. Chaque plateforme 4 peut donc être interposée entre deux pales 3 de soufflante consécutives.

Chaque plateforme 4 comporte une face interne 4b (ou radialement interne par référence audit axe) et une face externe 4a aérodynamique. Ces faces 4a, 4b s'étendent le long de l'axe sensiblement depuis les bords d'attaque 3a jusqu'aux bords de fuite 3b des deux pales 3 entre lesquelles cette plateforme 4 est montée.

A son extrémité amont (par référence à l'écoulement des gaz dans la soufflante et la turbomachine), chaque plateforme 4 comprend un rebord 5 de fixation ou d'accrochage au disque 2. Un rebord 9 similaire est situé à l'extrémité aval de chaque plateforme 4.

La face interne 4b de chaque plateforme 4 est reliée à une patte de fixation 6 sur une bride 8 du disque 2. Cette patte 6 s'étend en saillie radialement vers l'intérieur et comprend à son extrémité libre radialement interne un orifice de passage d'une vis 7 de fixation de la patte et de la plateforme 4 à la bride 8 et donc au disque 2.

La plateforme 4 visible aux figures 1 et 2 est réalisée d'une seule pièce en alliage métallique et la présente invention propose une plateforme composite qui peut être utilisée par exemple avec des aubes de soufflante également en composite.

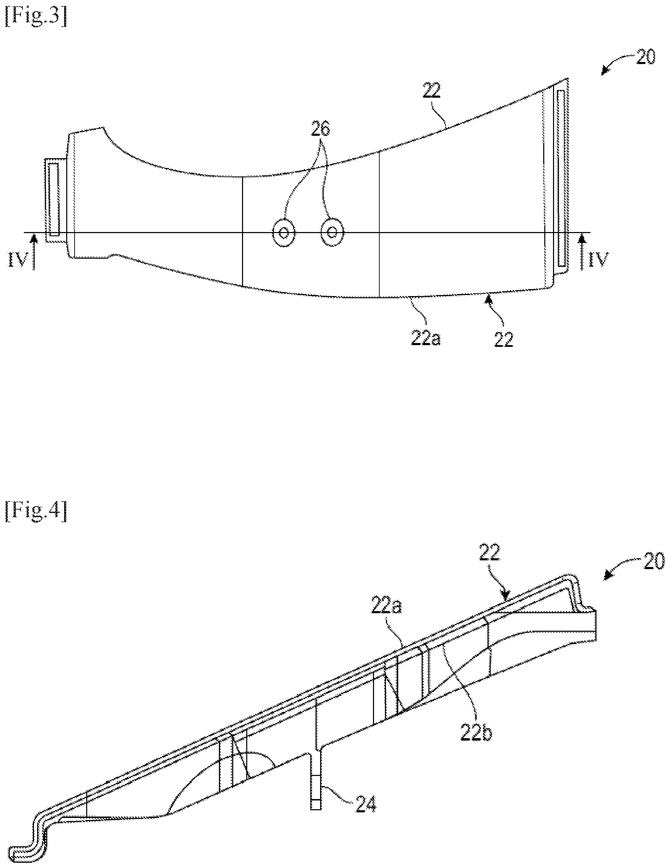

Les figures 3 à 5 décrivent un exemple de réalisation d'une plateforme composite qui ne fait pas partie de l'invention.

La plateforme composite 20 des figures 2 à 5 comporte une paroi 22 de forme allongée et configurée pour s'étendre entre deux aubes de soufflante.

Cette paroi 22 comporte une face externe 22a aérodynamique et une face interne 22b sur laquelle est située une patte de fixation 24 similaire à la patte 6 décrite dans ce qui précède.

La patte de fixation 24 est réalisée en alliage métallique et comprend une embase 24a reliée à une oreille 24b percée d'un orifice 24c de passage d'une vis (similaire à la vis 7 décrite dans ce qui précède).

L'embase 24a est plane et est appliquée sur la face interne 22b de la paroi 22. La paroi 22 est réalisée en matériau composite à partir d'une résine. La paroi 22 comprend sensiblement en son milieu des orifices qui sont alignés avec des orifices de l'embase 24a et qui reçoivent des vis 26 de fixation de la patte 24 à la paroi 22. Chaque vis 26 comprend une tête, de préférence fraisée, engagée dans un renfoncement de la face externe 22a de la paroi, et une tige filetée sur laquelle est vissé un écrou prenant appui sur l'embase 24a.

Cette technologie de plateforme composite n'est pas entièrement satisfaisante car elle présente des inconvénients.
- Le positionnement de la patte 24 sur la paroi 22 nécessite une forte précision (et donc un fort surcoût) pour respecter les contraintes géométriques imposées par l'aérodynamique. En plus, les têtes de vis 26 doivent impérativement être recouvertes afin de tenir la géométrie aérodynamique de la veine, ce qui génère également un surcoût par ajout d'une étape de recouvrement délicate et complexe dans sa maîtrise. Par ailleurs, le fait de recouvrir les têtes de vis par un enduit rend plus difficile leur localisation pour un éventuel démontage de la patte et retrait de la plateforme en vue de son remplacement par exemple.
- Chaque plateforme 20 a une masse importante, environ 1 kilogramme chacune, un rotor de soufflante comportant par exemple dix-huit plateformes 20.
- Une surépaisseur de la paroi 22 au niveau des vis 26 et de l'embase 24a est nécessaire pour réduire l'effort de matage dans la paroi, générée par son serrage ; serrage qui doit aussi résister aux efforts centrifuges vus par la pièce : la forme de serrage doit être supérieure à la somme des forces de matage et centrifuge (F serrage > F matage + F centrifuge).

La force de serrage est d'autant plus difficile à tenir que les têtes fraisées des vis 26 ne peuvent supporter des rondelles au droit de leur tête, ce qui participe à une mauvaise répartition des efforts de serrage et sollicite un volume plus faible de matière.
- La tenue géométrique de chaque plateforme 20 au cours du fonctionnement moteur suite aux efforts centrifuges. La moindre déformation fait perdre du rendement à la soufflante. De même, l'utilisation des vis 26 à tête fraisée réduit le volume de matière chargée par l'assemblage et augmente significativement les contraintes locales, en particulier au niveau des têtes de vis.

Ces deux derniers points engendrent la nécessité d'un serrage de vis très contrôlé (clé dynamométrique) et donc coûteux.
- La durabilité suite à l'étape de recouvrement des têtes de vis. La pièce doit en principe perdurer toute la vie du moteur sans altération. L'érosion alliée aux contraintes locales met en doute la possibilité de tenir ce critère.

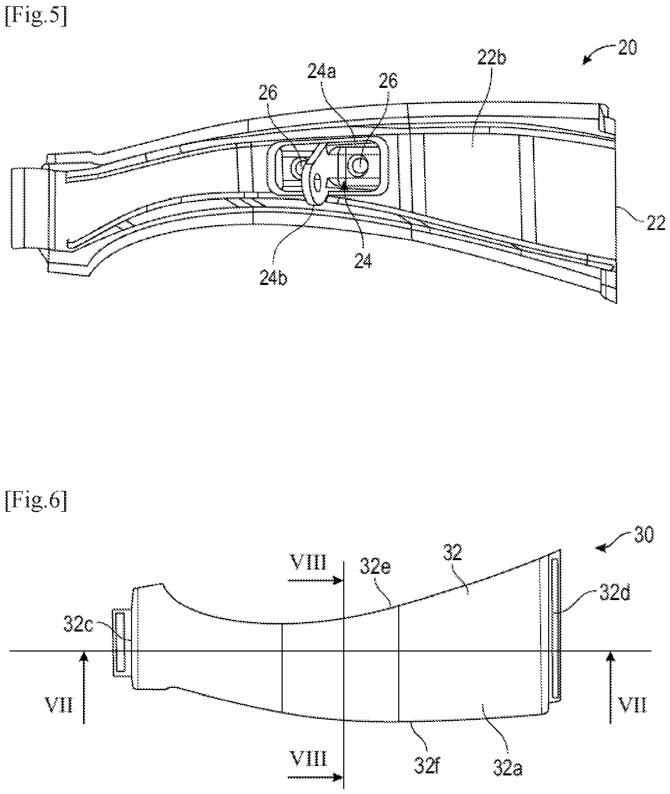

L'invention permet de remédier à au moins une partie de ces problèmes et propose une plateforme dont un mode de réalisation est représenté aux figures 6 à 8.

La plateforme composite 30 comporte une paroi 32 de forme allongée et configurée pour s'étendre entre deux aubes de soufflante.

Cette paroi 32 comporte une face externe 32a aérodynamique et une face interne 32b sur laquelle est située une patte 34 de fixation à un disque de soufflante.

La paroi 32 comporte en outre un bord amont 32c, un bord aval 32d, un bord latéral incurvé concave 32e et un bord latéral incurvé convexe 32f. On comprend que le bord incurvé concave 32e s'étend le long d'un extrados d'une aube, du bord d'attaque au bord de fuite de cette aube, et que le bord incurvé convexe 32f s'étend le long d'un intrados d'une aube adjacente, du bord d'attaque au bord de fuite de cette aube adjacente. A chacune des extrémités axiales de la paroi 32, au niveau des bords 32c, 32d, la paroi peut avoir un rebord ou former une marche. Ces extrémités sont destinées à coopérer avec les viroles du rotor de soufflante, comme évoqué dans ce qui précède en relation avec la figure 1.

La patte de fixation 34 est formée d'une seule pièce avec une armature métallique 36 qui est au moins en partie intégrée dans la paroi 32. L'armature est métallique car elle doit résister à un effort de plusieurs tonnes. Cette paroi 32 est réalisée par superposition de préimprégnés dans un moule, l'armature 36 étant disposée dans ce moule de façon à ne pas utiliser de vis de fixation ou analogue.

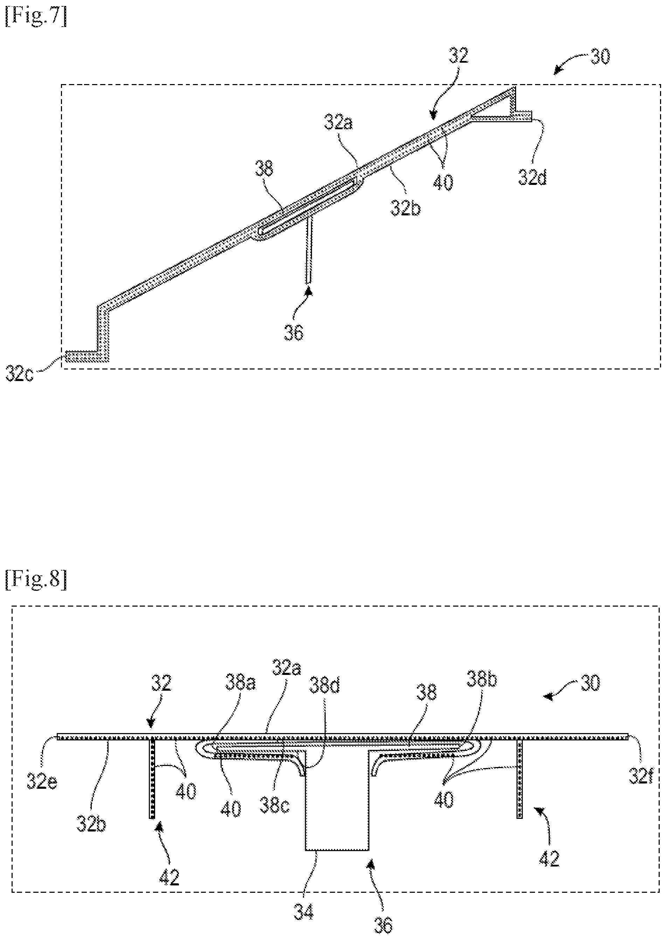

L'armature 36 comprend une plaque 38 qui s'étend le long de la paroi 32 et qui est reliée à la patte de fixation 34. La figure 7 permet de constater que la plaque 38 est située à distance des extrémités amont 32c et aval 32d de la paroi 32. La figure 8 permet quant à elle de constater que la plaque 38 comporte deux bords latéraux 38a, 38b qui sont en retrait par rapport aux bords latéraux 32e, 32f de la paroi 32. Les bords 32e, 32f de la paroi 32 sont ainsi réalisés à partir de préimprégnés et ne comprennent pas de partie métallique de la plaque, ce qui est particulièrement important car ces bords sont susceptibles d'entrer en contact avec une aube et être écrasable par cette aube en cas de rupture de cette dernière. La fonction « fusible » de ces bords est en effet un critère important de ces plateformes pour le critère de sécurité. L'armature 36 et en particulier la plaque 38 peuvent être au moins en partie revêtue d'un primaire d'accrochage ou être soumise à un traitement de surface, en vue d'améliorer la tenue mécanique des préimprégnés sur l'armature.

L'armature 36 peut être composée en aluminium, titane, ou acier fabriquée par fonderie, forgeage, emboutissage et soudage, usinage, électroérosion ou encore fabrication additive, etc.

La résine d'imprégnation 32 est thermoplastique ou thermodurcissable et est par exemple choisie parmi les matériaux suivants et leurs mélanges : polyaryléthercétones, polyétherimides, polyamides semi-aromatiques, et polyamides.

La plateforme 30 est fabriquée par un procédé comprenant plus précisément les étapes de :
a) préparation de tissus ou nappes préimprégnés avec une résine,
b) dépôt des tissus ou nappes dans un moule,
c) positionnement de l'armature 34 dans le moule, sur les tissus ou nappes, et
d) dépôt de tissus ou nappes sur une partie de l'armature, et en particulier la plaque 38, et
e) fermeture et chauffage du moule en vue de la solidification de l'ensemble formé par les tissus ou nappes et l'armature. Le chauffage peut être accompagné d'une compression, par exemple sous presse du moule, ou bâche à vide ou vessies, etc.

Comme on le voit à la figure 7, la paroi 32 est intégralement formée par les préimprégnés 40 qui s'étendent donc sur toute l'étendue de la paroi 32. Ils s'étendent en outre dans des raidisseurs 42 en saillie sur la face interne 32b de la paroi 32.

La face externe 32a de la paroi 32 peut être au moins en partie revêtue d'une couche amortissante (non représentée). Cette couche (surmoulage bi-matière, peinture, collage de film, etc.) peut participer aux modifications des fréquences propres de la pièce ou bien à la tenue dynamique de l'ensemble du rotor de soufflante.

L'invention apporte plusieurs avantages :
- Un gain de masse estimée entre 10 et 20% par pièce, en éliminant vis, écrous, et rondelles. La masse de la plateforme peut être minimisée via une conception optimisée de l'armature (épaississement aux endroits contraints, possibilité de creuser/évider l'armature, optimisation de sa forme et ses dimensions, etc.).
- Une garantie que la face aérodynamique 32a reste lisse dans le temps, sans perturbation de flux d'air, suite à la suppression des vis et une meilleure tenue de la pièce suite à une rigidification globale de la pièce due à l'armature et/ou aux renforts et/ou aux raidisseurs.
- Un gain de prix de la pièce qui peut ne pas nécessiter d'opération de retouche à la sortie du moule. Ce n'est plus un assemblage de plusieurs pièces mais une même et seule pièce du fait de l'intégration de plusieurs fonctions (raidisseurs, bords fusibles, etc.).
- Une simplification de montage et de fabrication. La pièce étant aux cotes finies, elle peut directement être montée. Sa géométrie et ses dimensions sont assurées par le moule. La géométrie finale est maîtrisée car le positionnement de l'armature métallique directement dans le moule permet de garantir la reproductibilité de la forme.
- Une amélioration de la durée de vie de la pièce puisque les contraintes de serrage sont nulles et l'effort transite au travers de l'armature métallique.

## Revendications

1. Procédé de fabrication d'une plateforme composite (30) pour une soufflante de turbomachine d'aéronef, cette plateforme comportant une paroi (32) de forme allongée et configurée pour s'étendre entre deux aubes de soufflante (3), cette paroi comportant une face externe (32a) aérodynamique et une face interne (32b) sur laquelle est située une patte de fixation (34) configurée pour être fixée à un disque de soufflante (2), comprenant les étapes de :
a) préparation de tissus ou nappes préimprégnés avec une résine,
b) dépôt des tissus ou nappes dans un moule, **caractérisé en ce qu'**il comprend en outre les étapes de:
c) positionnement d'une armature métallique (36) dans le moule, sur les tissus ou nappes, l'armature étant formée d'une seule pièce avec ladite patte de fixation,
d) dépôt de tissus ou nappes sur une partie de l'armature, et
e) fermeture et chauffage du moule en vue de la solidification de l'ensemble formé par les tissus ou nappes et l'armature.

2. Procédé selon la revendication 1, dans lequel l'armature (36) comprend une plaque (38) qui est reliée à ladite patte de fixation (36) et qui est disposée entre deux tissus ou nappes, ou deux plis de tissus ou nappes.

3. Procédé selon la revendication 2, dans lequel la plaque (38) est située à distance des extrémités amont et aval de la paroi (32).

4. Procédé selon la revendication 2 ou 3, dans lequel la paroi (32) comprend au moins un bord latéral (32e, 32f) qui est incurvé, la plaque (38) comportant au moins un bord latéral (38a, 38b) qui est en retrait par rapport à ce bord latéral de la paroi.

5. Procédé selon l'une des revendication 2 à 4, dans lequel la paroi (32) comprend un bord latéral (32e) qui est incurvé concave et un bord latéral (32f) opposé qui est incurvé convexe, la plaque (38) comportant deux bords latéraux (38a, 38b) qui sont en retrait par rapport aux bords latéraux de la paroi.

6. Procédé selon l'une des revendications précédentes, dans lequel l'armature (36) est au moins en partie revêtue d'un primaire d'accrochage et/ou la face externe (32a) de la paroi (32) est au moins en partie revêtue d'une couche amortissante.

7. Procédé selon l'une des revendications précédentes, dans lequel la résine est choisie parmi les matériaux suivants et leurs mélanges : polyaryléthercétones, polyétherimides, polyamides semi-aromatiques, et polyamides.

8. Procédé selon l'une des revendications précédentes, dans lequel des raidisseurs (42) sont en saillie sur la face interne (32b) de la paroi (32) et sont réalisées en résine.

9. Plateforme composite (30) pour une soufflante de turbomachine d'aéronef, cette plateforme comportant une paroi (32) de forme allongée et configurée pour s'étendre entre deux aubes de soufflante (3), cette paroi comportant une face externe (32a) aérodynamique et une face interne (32b) sur laquelle est située une patte de fixation (34) configurée pour être fixée à un disque de soufflante (2), la plateforme comprenant des tissus ou nappes préimprégnés avec une résine,
**caractérisé en ce que**:
une armature métallique (36) est formée d'une seule pièce avec ladite patte de fixation, l'armature étant positionnée sur les tissus ou nappes, et
des tissus ou nappes étant déposées sur une partie de l'armature, cette plateforme étant dépourvue d'éléments mécaniques de fixation de l'armature á la plateforme, et ladite face externe étant dépourvue d'orifices de montage de tels éléments,
cette plateforme étant fabriquée par un procédé selon l'une des revendications précédentes.

10. Turbomachine d'aéronef, **caractérisée en ce qu'**elle comporte une soufflante comportant un disque (2) portant des aubes (3) et des plateformes (30) selon la revendication précédente.

## Patentansprüche

1. Plattform in Verbundbauweise (30) für einen Bläser eines Flugzeugtriebwerks, wobei diese Plattform eine Wand (32) umfasst, die eine längliche Form umfasst und dazu konfiguriert ist, sich zwischen zwei Gebläseschaufeln (3) zu erstrecken, wobei diese Wand eine aerodynamische Außenseite (32a) und eine Innenseite (32b) umfasst, an der sich eine Befestigungslasche (34) befindet, die dazu konfiguriert ist, an einer Gebläsescheibe (2) befestigt zu werden,
umfassend die Schritte zum:
a) Vorbereiten von mit einem Harz vorimprägnierten Geweben oder Bahnen,
b) Ablegen der Gewebe oder Bahnen in einer Form,
**dadurch gekennzeichnet, dass** sie weiter die Schritte umfasst zum:
c) Positionieren eines metallischen Rahmens (36) in der Form, auf den Geweben oder Bahnen, wobei das Rahmen einstückig mit der Befestigungslasche ausgebildet wird,
d) Ablegen von Geweben oder Bahnen auf einem Teil des Rahmens, und
e) Schließen und Erhitzen der Form zwecks Verfestigung der durch die Gewebe oder Bahnen und das Rahmen gebildeten Einheit.

2. Verfahren nach Anspruch 1, wobei das Rahmen (36) eine Platte (38) umfasst, die mit der Befestigungslasche (36) verbunden ist, und die zwischen zwei Geweben oder Bahnen, oder zwei Falten aus Geben oder Bahnen angeordnet ist.

3. Verfahren nach Anspruch 2, wobei sich die Platte (38) in einem Abstand von den Enden stromaufwärts und stromabwärts der Wand (32) angeordnet ist.

4. Verfahren nach Anspruch 2 oder 3, wobei die Wand (32) mindestens eine Seitenrand (32e, 32f) umfasst, der gekrümmt ist, wobei die Platte (38) mindestens einen Seitenrand (38a, 38b) umfasst, die in Bezug auf diesen Seitenrand der Wand zurückversetzt ist.

5. Verfahren nach einem der Ansprüche 2 bis 4, wobei die Wand (32) einen Seitenrand (32e) umfasst, der konkav gekrümmt ist, und einen gegenüberliegenden Seitenrand (32f), dere konvex gekrümmt ist, wobei die Platte (38) zwei Seitenränder (38a, 38b) umfasst, die in Bezug auf die Seitenränder der Wand zurückversetzt sind.

6. Verfahren nach einem der vorstehenden Ansprüche, wobei das Rahmen (36) mindestens zum Teil mit einer Haftgrundierung beschichtet ist und/oder die Außenseite (32a) der Wand (32) mindestens zum Teil mit einer dämpfenden Schicht beschichtet ist.

7. Verfahren nach einem der vorstehenden Ansprüche, wobei das Harz aus den folgenden Materialien und deren Mischungen ausgewählt ist: Polyaryletherketone, Polyetherimide, halb-aromatische Polyamide, und Polyamide.

8. Verfahren nach einem der vorstehenden Ansprüche, wobei Versteifungen (42) an der Innenseite (32b) der Wand (32) vorspringen und aus Harz hergestellt sind.

9. Plattform in Verbundbauweise (30) für einen Bläser eines Flugzeugtriebwerks, wobei diese Plattform eine Wand (32) umfasst, die eine längliche Form umfasst und dazu konfiguriert ist, sich zwischen zwei Gebläseschaufeln (3) zu erstrecken, wobei diese Wand eine aerodynamische Außenseite (32a) und eine Innenseite (32b) umfasst, an der sich eine Befestigungslasche (34) befindet, die dazu konfiguriert ist, an einer Gebläsescheibe (2) befestigt zu werden, wobei die Plattform mit einem Harz vorimprägnierte Gewebe oder Bahnen umfasst,
**dadurch gekennzeichnet, dass**:
ein Metallrahmen (36) einstückig mit der Befestigungslasche ausgebildet ist, wobei das Rahmen auf den Geweben oder Bahnen positioniert ist, und Gewebe oder Bahnen auf einem Teil des Rahmens abgelegt sind,
wobei diese Plattform ohne mechanische Elemente zum Befestigen des Rahmens an der Plattform ausgeführt ist, und wobei die Außenseite ohne Öffnungen zur Montage solcher Elemente ausgeführt ist,
wobei diese Plattform durch ein Verfahren nach einem der vorstehenden Ansprüche hergestellt ist.

10. Flugzeugtriebwerk, **dadurch gekennzeichnet, dass** es einen Bläser umfasst, der eine Scheibe (2) umfasst, die Schaufeln (3) und Plattformen (30) nach dem vorstehenden Anspruch trägt.

## Claims

1. A method for manufacturing a composite platform (30) for an aircraft turbine engine fan, this platform comprising a wall (32) of elongated shape and configured to extend between two fan vanes (3), this wall comprising an aerodynamic external face (32a) and an internal face (32b) on which is located an attachment tab (34) configured to be attached to a fan disc (2),
comprising the steps of:
a) preparing fabrics or sheets pre-impregnated with a resin,
b) depositing the fabrics or sheets in a mould,
**characterised in that** it further comprises the steps of:
c) positioning a metallic framework (36) in the mould, on the fabrics or sheets, the framework being formed in one part with said attachment tab,
d) depositing fabrics or sheets on a portion of the framework, and
e) closing and heating the mould in order to solidify the assembly formed by the fabrics or sheets and the framework.

2. The method according to claim 1, wherein the framework (36) comprises a plate (38) that is connected to said attachment tab (36) and that is arranged between two fabrics or sheets, or two plies of fabrics or sheets.

3. The method of claim 2, wherein the plate (38) is located away from the upstream and downstream ends of the wall (32).

4. The method according to claim 2 or 3, wherein the wall (32) comprises at least one lateral edge (32e, 32f) that is curved, the plate (38) comprising at least one lateral edge (38a, 38b) that is set back with respect to that lateral edge of the wall.

5. The method of any of claims 2 to 4, wherein the wall (32) comprises a lateral edge (32e) that is concavely curved and an opposite lateral edge (32f) that is convexly curved, the plate (38) comprising two lateral edges (38a, 38b) that are set back with respect to the lateral edges of the wall.

6. The method according to any of the preceding claims, wherein the framework (36) is at least partly coated with a bonding primer and/or the external face (32a) of the wall (32) is at least partly coated with a damping layer.

7. The method according to any of the preceding claims, wherein the resin is selected from the following materials and mixtures thereof: polyaryletherketones, polyetherimides, semi-aromatic polyamides, and polyamides.

8. The method according to any of the preceding claims, wherein stiffeners (42) project from the internal face (32b) of the wall (32) and are made of resin.

9. A composite platform (30) for an aircraft turbine engine fan, this platform
this platform comprising a wall (32) of elongated shape and configured to extend between two fan vanes (3), this wall comprising an aerodynamic external face (32a) and an internal face (32b) on which is located an attachment tab (34) configured to be attached to a fan disc (2), the platform comprising fabrics or sheets pre-impregnated with a resin,
**characterized in that**:
a metallic framework (36) is formed in one part with said attachment tab, the framework being positioned on the fabrics or sheets, and fabrics or sheets being deposited on a portion of the framework, and
this platform being devoid of mechanical elements for attaching the framework to the platform, and said external face being devoid of orifices for mounting such elements, the platform being manufactured by a method according to any of the preceding claims.

10. An aircraft turbine engine, **characterised in that** it comprises a fan comprising a disc (2) carrying vanes (3) and platforms (30) according to the preceding claim.
